# EUROPEAN PATENT APPLICATION

(11) **EP 4 645 989 A1**
(43) Date of publication of application: **05.11.2025**
(21) Application number: 24744313.8
(22) Date of filing: 17.01.2024
(51) Int. Cl.: H04W 72/1263

(54) **SCHEDULING METHOD AND APPARATUS, COMMUNICATION DEVICE AND COMPUTER STORAGE MEDIUM**

(30) Priority: 18.01.2023 CN 202310101318
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100053 (CN)
(74) Representative: J A Kemp LLP
(86) International application number: PCT/CN2024/072818
(87) International publication number: WO 2024/153139

(57) **Abstract**

Disclosed in the embodiments of the present application are a scheduling method and apparatus, a communication device and a computer storage medium. The method comprises: a terminal receiving first information sent by a network device, wherein the first information comprises information of at least one logical function body; and the terminal processing data of a first logical function body on the basis of information of the first logical function body and a first characteristic of the data of the first logical function body, wherein the first logical function body is any logical function body among the at least one logical function body, the data in the first logical function body has at least one relationship, and the processing comprises at least one of resource allocation, sending, receiving and submission to an upper layer.

## Description

### CROSS-REFERENCE TO RELATED APPLICATION

This application is based on, and claims priority to Chinese Patent Application No. 202310101318.8, filed on January 18, 2023, the disclosure of which is hereby incorporated by reference in its entirety.

### TECHNICAL FIELD

The present disclosure relates to the technical field of communication, particularly to a method and apparatus for scheduling, a communication device and a computer storage medium.

### BACKGROUND

The Extended Reality (XR) system has two outstanding characteristics: the information integration of the real world and the virtual world, and the real-time interactivity. The XR system uses the multi-channel interaction, the humans themselves have the capability of a variety of sensory perceptions, and the virtual environment can provide the user with a reality and highly immersion sensory experience. The gesture, body gesture, speech and even eye viewpoint capture can be used as the interaction manners in the augmented reality system. In addition, the tactile sense, olfactory sense, auditory sense, force feedback, etc. can also be used as the output, thereby implementing the combination of multi-channel augmented reality interaction and user intention.

On the other hand, for the traditional services, it is basically sufficient for the base station to ensure two key characteristics: the delay by early scheduling and allocating more resources, and the reliability by allocating more resources or multiple retransmissions. Therefore, it can basically satisfy the Quality of Service (QoS) requirement of the service by configuring the logical channel with bound priority. However, the XR service has multi-dimensional characteristics, and the traditional processing methods cannot adapt to the needs of the XR service.

### SUMMARY

In order to solve the existing technical problems, the embodiments of the present disclosure provide a method for scheduling, a device, a communication device, and a computer storage medium.

In order to implement the above object, the technical solution of the embodiments of the disclosure is implemented as follows.

In a first aspect, the embodiments of the present disclosure provide a method for scheduling, the method includes following operations.

The terminal receives first information transmitted by a network device, herein the first information includes information of at least one logical function entity.

The terminal processes data of a first logical function entity based on information of the first logical function entity and a first characteristic of the data of the first logical function entity; herein the first logical function entity is one of the at least one logical function entity.

The data of the first logical function entity has at least one relationship; and the processing includes at least one of: resource allocation, transmission, reception, or delivery to an upper layer.

In an embodiment, the first characteristic includes at least one of: an importance, a delay, a delay budget, a reliability, a layer, a packet length, a jitter requirement, a jitter range, a packet error rate, a packet error rate requirement, a resolution, layer information, a transmission format of Quality of Service Flow Identifier (QFI), a transmission format, a transmission bandwidth requirement, a type of slice, slice segmentation information, or a depth of parameter.

In an embodiment, the relationship that the data of the first logical function entity has includes at least one of:
importances of part or all of the data being different;
layers of part or all of the data being different;

Quality of Service Flow Identifiers (QFIs) of part or all of the data being different;
the data belonging to at least one Protocol Data Unit (PDU) set;
the data belonging to at least one data burst;
the data belonging to at least one Quality of Service (QoS) flow; or
the data belonging to at least one QoS flow, the QoS flow including at least one PDU set.

In an embodiment, the QoS flow includes at least one PDU set, and at least one of followings applies to one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

In an embodiment, the information of the first logical function entity includes at least one of the following:
at least one Protocol Data Unit (PDU) set;
at least one data burst;
at least one Quality of Service (QoS) flow;
at least one importance;
at least one of following parameters: at least one packet delay budget (PDB), a packet error rate (PER), a packet set delay budget (PSDB), or a packet set error rate (PSER);
at least one of: a PDU set, a data burst, a QoS flow, a Data Radio Bearer (DRB) or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; or
at least one packet loss policy indication.

In an embodiment, in a case where one QoS flow is mapped to at least one Data Radio Bearer (DRB) corresponding to the first logical function entity, the QoS flow includes a plurality of PDU sets; and/or
in a case where a plurality of QoS flows are mapped to at least one DRB corresponding to the first logical function entity, each of the plurality of QoS flows includes one PDU set.

Each PDU set includes PDUs or data packets of one type or priority, or PDUs or data packets included in each PDU set correspond to a same 5G QoS indicator (5QI).

In an embodiment, the information of the first logical function entity includes: the information of at least one of followings that correspond to the first logical function entity: at least one first Radio Link Control (RLC) entity, at least one Packet Data Convergence Protocol (PDCP) entity, or at least one L2 entity.

In an embodiment, at least one first RLC entity corresponding to the first logical function entity includes:
at least one PDCP entity corresponding to the at least one first RLC entity.

In an embodiment, the operation that the terminal processes the data of the first logical function entity based on the information of the first logical function entity and the first characteristic of the data of the first logical function entity includes following operation.

The terminal maps at least one of a packet, a Protocol Data Unit (PDU), a PDU set or a data burst to at least one Data Radio Bearer (DRB) corresponding to the first logical function entity according to a first characteristic of the at least one of the packet, the PDU, the PDU set or the data burst.

In an embodiment, the operation that the terminal processes the data of the first logical function entity based on the information of the first logical function entity and the first characteristic of the data of the first logical function entity includes following operation.

The first Radio Link Control (RLC) entity or an L2 entity of the terminal transmits or delivers to a Medium Access Control (MAC) entity the first indication information of an application layer or a higher layer, and/or a first characteristic of at least one of followings that are transmitted or mapped to the first logical function entity: a packet, a Protocol Data Unit (PDU), a PDU set, a QoS flow or a data burst.

In an embodiment, the operation that the RLC entity or an L2 entity of the terminal transmits or delivers to the MAC entity the first indication information of an application layer or a higher layer, and/or a first characteristic of at least one of followings that are transmitted or mapped to the first logical function entity: a packet, a PDU, a PDU set, a QoS flow or a data burst, includes following operation.

The first RLC entity or the L2 entity of the terminal transmits the control signaling and/or a data packet to the MAC entity, and the control signaling and/or packet header information of the data packet includes the first indication information and/or the first characteristic.

In an embodiment, the first indication information includes at least one of:
information indicating a picture quality; or
information indicating an air interface resource status.

In an embodiment, a plurality of first rules are applied to data transmission of the first logical function; and/or, the first logical function entity has a plurality of output interfaces for transmitting data; herein each output interface corresponds to a respective one of the first rules.

In an embodiment, the first rule includes at least one of:
preferentially allocating an uplink grant to data of the first logical function entity that arrives earlier and has an integrity parameter that reaches a first value;
preferentially allocating the uplink grant to data of the first logical function entity that arrives earlier and is at a highest importance parameter level;
preferentially allocating the uplink grant to data of the first logical function entity that is at the highest importance parameter level;
preferentially allocating the uplink grant to data of the first logical function that has an integrity requirement and/or a multi-stream co-processing requirement with one or more packets that have been successfully processed;
preferentially allocating the uplink grant to data of the first logical function entity that arrives earlier and has a highest quantity requirement in a layer parameter;
preferentially allocating the uplink grant to data of the first logical function entity that has the highest quantity requirement in the layer parameter;
in a case where data at a high importance parameter level is lost in data of a Protocol Data Unit (PDU) set with an integrity characteristic, discarding other data in the PDU set with the integrity characteristic;
in a case where data at high importance parameter level is lost in the data of the PDU set with the integrity characteristic, processing other data in the PDU set with the integrity characteristic normally;
in a case where a first integrity parameter of a first PDU set in which first data is located is same as a second integrity parameter of a second PDU set in which second data is located, in response to a first priority of the first data being higher than a second priority of the second data, preferentially allocating the uplink grant to the first data; or
in a case where a first integrity indicated by the first integrity parameter of the first PDU set in which the first data is located is higher than a second integrity indicated by the second integrity parameter of the second PDU set in which the second data is located, preferentially allocating the uplink grant to the first data.

In an embodiment, the operation that the terminal processes the data of the first logical function entity based on the information of the first logical function entity and the first characteristic of the data of the first logical function entity includes following operation.

In a case where a picture quality indicated by the information indicating the picture quality is higher than a first threshold, and/or in a case where an air interface resource status indicated by the information indicating the air interface resource status is higher than a second threshold, the data that is transmitted to and/or mapped to the first logical function entity is processed by using the first rule. The first rule is related at least to an integrity parameter of a PDU set, and the integrity parameter includes at least one of a transmission completion rate, a transmission success rate or a transmission failure rate.

In an embodiment, the operation that the terminal processes the data of the first logical function entity based on the information of the first logical function entity and the first characteristic of the data of the first logical function entity includes: in a case where an air interface resource state indicated by the information indicating the air interface resource state is not higher than a second threshold, processing data that is transmitted to and/or mapped to the first logical function entity by using a second rule, wherein the second rule is related at least to a priority of data.

In a second aspect, the embodiments of the present disclosure provide a method for scheduling, the method includes following operations.

The network device transmits the first information to a terminal, herein the first information includes information of at least one logical function entity; the information of the first logical function entity is used for processing data of the first logical function entity by the terminal; the first logical function entity is any one of the at least one logical function entity; the data of the first logical function entity has at least one relationship; and the processing includes at least one of: resource allocation, transmission, reception, or delivery to an upper layer.

The network receives the data of the first logical function entity transmitted by the terminal.

In an embodiment, the relationship that the data of the first logical function entity has includes at least one of:
importances of part or all of the data being different;
layers of part or all of the data being different;

Quality of Service Flow Identifiers (QFIs) of part or all of the data being different;
the data belonging to at least one Protocol Data Unit (PDU) set;
the data belonging to at least one data burst;
the data belonging to at least one Quality of Service (QoS) flow; or
the data belonging to at least one QoS flow, the QoS flow including at least one PDU set.

In an embodiment, the QoS flow includes at least one PDU set, and at least one of followings applies to one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

In an embodiment, the information of the first logical function entity includes at least one of the following:
at least one Protocol Data Unit (PDU) set;
at least one data burst;
at least one Quality of Service (QoS) flow;
at least one importance;
at least one of following parameters: packet delay budget (PDB), a packet error rate (PER), a packet set delay budget (PSDB), or a packet set error rate (PSER);
at least one of: a PDU set, a data burst, a QoS flow, a Data Radio Bearer (DRB) or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; or
at least one packet loss policy indication.

In an embodiment, in a case where one QoS flow is mapped to at least one Data Radio Bearer (DRB) corresponding to the first logical function entity, the QoS flow includes a plurality of PDU sets; and/or
in a case where a plurality of QoS flows are mapped to at least one DRB corresponding to the first logical function entity, each of the plurality of QoS flows includes one PDU set.

Each PDU set includes PDUs or data packets of one type or priority, or PDUs or data packets included in each PDU set correspond to a same 5G QoS indicator (5QI).

In an embodiment, the information of the first logical function entity includes the information of at least one of followings that correspond to the first logical function entity: at least one first Radio Link Control (RLC) entity, at least one Packet Data Convergence Protocol (PDCP) entity, or at least one L2 entity.

In an embodiment, at least one first RLC entity corresponding to the first logical function entity includes:
at least one PDCP entity corresponding to the at least one first RLC entity.

According to a third aspect, the embodiments of the present disclosure further provide a device for scheduling. The device includes: a first communication unit and a first processing unit.

The first communication unit is configured to receive first information transmitted by a network device, herein the first information includes information of at least one logical function entity

The first processing unit is configured to process data of a first logical function entity based on information of the first logical function entity and a first characteristic of the data of the first logical function entity; herein the first logical function entity is one of the at least one logical function entity; the data of the first logical function entity has at least one relationship; and the processing includes at least one of: resource allocation, transmission, reception, or delivery to an upper layer.

According to a fourth aspect, the embodiments of the present disclosure further provide a device for scheduling. The device includes: a first transmitting unit and a first receiving unit.

The first transmitting unit is configured to transmit first information to a terminal, herein the first information includes information of at least one logical function entity; the information of the first logical function entity is used for processing data of the first logical function entity by the terminal; the first logical function entity is any one of the at least one logical function entity; the data of the first logical function entity has at least one relationship; and the processing includes at least one of: resource allocation, transmission, reception, or delivery to an upper layer.

The first receiving unit is configured to receive the data of the first logical function entity transmitted by the terminal.

In a fifth aspect, the embodiments of the present disclosure further provide a computer-readable storage medium having stored thereon the computer program, and the program, when executed by a processor, implements the steps of the method for scheduling according to the first aspect or the second aspect of the embodiments of the present disclosure.

At a sixth aspect, the embodiments of the present disclosure further provide a communication device, which includes a memory, a processor, and a computer program stored on the memory and executable on the processor, the processor is configured to, when the program is executed, implement steps of the method for scheduling according to the first aspect or the second aspect.

The embodiments of the present disclosure provide a method and apparatus for scheduling, a communication device, and a computer storage medium. The method includes following operations. The terminal receives first information transmitted by a network device, the first information includes information of at least one logical function entity. The terminal processes data of a first logical function entity based on information of the first logical function entity and a first characteristic of the data of the first logical function entity; the first logical function entity is one of the at least one logical function entity. The data of the first logical function entity has at least one relationship; and the processing includes at least one of: resource allocation, transmission, reception, or delivery to an upper layer. According to the technical solution of the embodiments of the present disclosure, it is extended from the conventional scheduling mechanism of the logical channel to the logical function entity orienting to the multi-characteristic service, and the priorities of the data in the logical function entity may be different, but have at least one relationship, such as an association. The scheduling process for data may be implemented through the logical function entity, such that the requirements of the multi-dimensional service may be met.

### BRIEF DESCRIPTION OF THE DRAWINGS

FIG. 1A and FIG. 1B are schematic diagrams of the multi-dimensional characteristics of the XR service data.
FIG. 2 is a first flow schematic diagram of a method for scheduling according to an embodiment of the present disclosure.
FIG. 3A is a schematic diagram of scheduling based on the logical channel.
FIG. 3B is a schematic diagram of scheduling of a logical function entity in the method for scheduling according to an embodiment of the present disclosure.
FIG. 4 is a second flow schematic diagram of a method for scheduling according to an embodiment of the present disclosure.
FIG. 5 is a first structural schematic diagram of the composition of a device for scheduling according to an embodiment of the present disclosure.
FIG. 6 is a second structural schematic diagram of the composition of a device for scheduling according to an embodiment of the present disclosure.
FIG. 7 is a structural schematic diagram of the hardware composition of a communication device according to an embodiment of the present disclosure.

### DETAILED DESCRIPTION

The present disclosure will be further described in detail below with reference to the accompanying drawings and the specific embodiments.

The technical solution of the embodiments of the present disclosure may be applied to various communication systems, such as a Global System of Mobile communication (GSM) system, a Long Term Evolution (LTE) system, a 5G system, and the like. Alternatively, the 5G system or 5G network may also be referred to as a New Radio (NR) system or an NR network.

Exemplarily, the communication system to which the embodiments of the present disclosure are applied may include a network device and a terminal device (which also may be referred to as a terminal, a communication terminal, or the like). The network device may be a device that communicates with the terminal device. The network device may provide the communication coverage for a certain area and may communicate with terminals which are located within the area. Optionally, the network device may be a base station in various communication systems, such as an Evolutionary Node B (eNB) in an LTE system, a base station (gNB) in a 5G system or an NR system, or a base station in a 6-th generation (6G) system.

It is to be understood that a device with the communication function in a network/system in the embodiments of the present disclosure may be referred to as a communication device. The communication device may include a network device and a terminal device with the communication function. The network device and the terminal device may be the specific devices described above and will not be elaborated herein. The communication device may also include other devices in the communication system, such as the network controller, the mobility management entity, and other network entities, which are not limited in the embodiments of the present disclosure.

It is to be understood that the terms "system" and "network" in the present disclosure are often used interchangeably herein. The term "and/or" herein merely describes an association relationship of the associated objects and represents that three relationships may exist. For example, A and/or B may represent the following three cases: only A exists, both A and B exist, and only B exists. Further, the character "/" herein generally means that the associated objects have an "or" relationship.

The terms "first", "second", etc. in the specification and claims of the present disclosure are used to distinguish similar objects and are not necessarily used to describe a particular order or priority sequence. It is to be understood that the data used in such way may be interchanged when appropriate, so that the embodiments of the disclosure may be implemented in an order other than those illustrated or described herein. In addition, the terms "including" and "having" and any variations thereof are intended to cover non-exclusive inclusion. For example, a process, a method, a system, a product, or a device including a series of steps or units are not limited to those steps or units that explicitly listed, but may include other steps or units that are not explicitly listed or that are inherent to the process, method, product, or device.

Before describing the technical solution of the embodiment of the present disclosure in detail, the multi-dimensional characteristics of the XR service are briefly described.

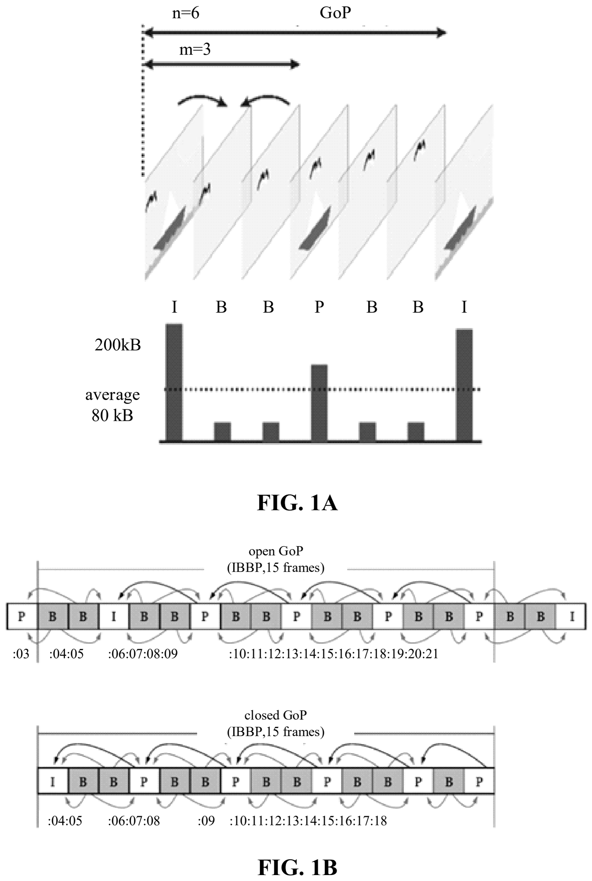

The XR service data mainly includes the multimedia data, and the multimedia data may include, for example, the video data, the audio data, and the like. In the embodiment, the video data is mainly described. The picture/image mentioned in the present disclosure are not limited to the picture/image, and may also include the video, the audio, the picture, etc. In the video compression, each frame represents a still image. In the actual compression, various algorithms will be used to reduce the data capacity, the IPB is the most common. Taking the Group of Pictures (GoP) describing the video data as an example, a GoP may represent a group of successive pictures. As illustrated in Figure 1a, the picture or frame is classified into three types: the I frame, the P frame and the B frame. I is an intra coded frame, P is a forward predictive frame, and B is a bi-directional difference frame. In other words, the I frame is a key frame, which can be understood as a whole picture. The P frame and the B frame record the change with respect to the I frame, the P frame represents the difference from the previous frame, and the B frame represents the difference from the previous frame and the subsequent frame. Both the P frame and the B frame compress the data based on the I frame. The I frame represents the key frame, which can be understood as the complete preservation of this frame. Because the I frame contains a whole picture, only the data of the current frame is needed for completing the decoding. The P frame represents the difference between the current frame and a previous key frame (or P frame), and when the decoding is performed, it is necessary to superimpose the difference defined by the current frame with the previously buffered picture to generate the final picture. The B frame is a bidirectional difference frame. That is, the B frame records the differences between the current frame and the previous and subsequent frames. To decode the B frame, not only the previous buffer picture is required to be obtained, but also the subsequent picture is required to be decoded, and the final picture is obtained by superimposing the previous and subsequent pictures with the data of the current frame. Generally, the compression rate of I is 7, the compression rate of P is 20, and the compression rate of B may be up to 50. It can be seen that the use of B frame may save a lot of space, and the saved space may be used to save more I frames, so that a better picture quality may be provided with the same bit rate.

There are two structures or formats for the GoP, as illustrated in FIG. 1b, i.e., the open GoP and the closed GoP. The decoding for a certain frame in the GoP relies on some frames in the previous GoP. This GoP structure is referred to as the open GoP. The frame in a closed GOP does not rely on other previous or subsequent GOPs, and the closed GoP generally starts with the I frame.

Further, each picture or frame may be further divided into a plurality of slices (or slicings, video slices), and each slice is composed of one or more slice segments (SS). In addition, each picture or frame may also be divided into a plurality of tiles (or video blocks). The purpose of dividing the slice and the tile is for independent decoding, but the division manners of the slice and the tile are different. The shape of a tile is basically rectangular, while the shape of a slice is strip-like. The slice consists of a series of SS, and an SS consists of a series of Coding Tree Units (CTUs). The tile is directly consists of a series of CTUs.

It can be seen from the above description that: 1. There may be an association between a plurality of data packets and an association between a plurality of QoS flows, and a group of data packets belonging to a Protocol Data Unit (PDU) set (PDU set) needs to be jointly processed; 2. The priorities of the data packets in one service or in one QoS flow are different, for example, the importances of I frame/P frame are different; 3. In the XR service, there may be a synchronization requirement for the multi-mode services (or different services), and the data packets of different services are also associated with each other, so they need to be considered when scheduling processing.

If the existing scheduling method based on the logical channel is still followed, it is difficult to meet the multi-dimensional characteristic of the XR service. If the I frame, the P frame and the B frame that form one picture are mapped to one logical channel, the priorities of them are different. The main function of the conventional logical information is to bind them to one priority, which becomes an important basis for scheduling data in the Medium Access Control (MAC) layer. If the I frame, the P frame and the B frame with different priorities are mapped to different logical channels, according to the current scheduling framework and principle, the operation for the data packets in each logical channel is independent. The operation includes the packet sequence number allocation, packet ordering, packet discarding, packet retransmission, upward delivery and/or downward delivery, etc. Thus, it is difficult to implement the integrity scheduling for the data packets of one GOP and the processing (such as preferentially processing, discarding, retransmission, upward delivery and/or downward delivery) for the associated packets. Therefore, the current scheduling mechanism based on the logical channel cannot meet the requirements of the above-mentioned multi-dimensional characteristic of the XR service.

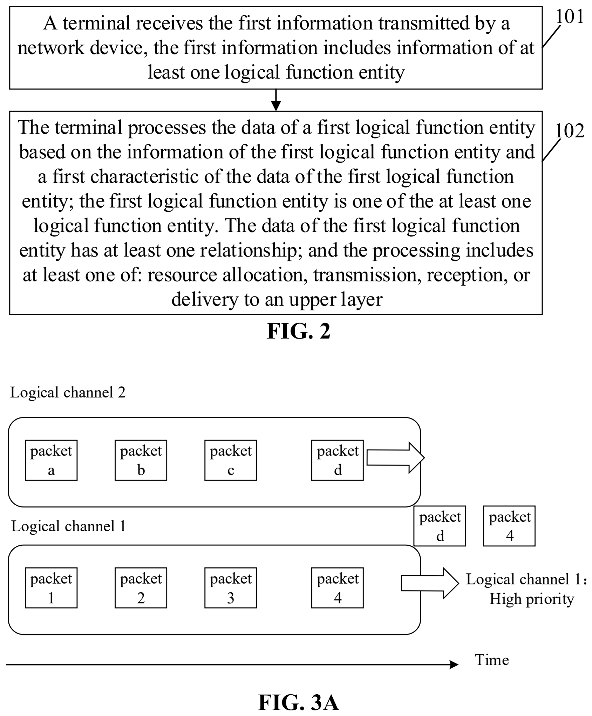

Based at least on the foregoing, the embodiments of the present disclosure provide a method for scheduling, and the method is applied to a terminal. FIG. 2 is a first flow schematic diagram of a method for scheduling according to an embodiment of the present disclosure. As illustrated in FIG. 2, the method includes steps 101 to 102.

At step 101, a terminal receives the first information transmitted by a network device. The first information includes information of at least one logical function entity.

At step 102, the terminal processes the data of a first logical function entity based on the information of the first logical function entity and a first characteristic of the data of the first logical function entity; herein the first logical function entity is one of the at least one logical function entity. The data of the first logical function entity has at least one relationship; and the processing includes at least one of: resource allocation, transmission, reception, or delivery to an upper layer.

Exemplarily, if the first logical function entity is at the MAC layer, the upper layer is an RLC layer and/or a PDCP layer.

The first characteristic of the data of the first logical function entity may correspond to a type of the data of the first logical function.

The present embodiment extends from the conventional scheduling mechanism of the logical channel to the logical function entity orienting to the multi-characteristic service, and the priorities of the data in the logical function entity may be different, but there is at least one relationship between the data, such as an association. The scheduling process for the data may be implemented through the logical function entity, such that the requirements of the multi-dimensional service may be met.

In the present embodiment, the network device transmits the first information to the terminal, the first information includes the information of at least one logical function entity. The information of each logical function entity at least includes an identification of the logical function entity and the related configuration information, such that the terminal may determine a processing manner for the data which is mapped to the first logical function entity according to the information of the logical function entity, and may process the data of the first logical function entity based on the processing manner for the data of the first logical function entity. The first logical function entity is any one of the at least one logical function entity. That is, the first logical function entity will be taken as an example to describe the following embodiments of the present disclosure.

In some alternative embodiments, a plurality of first rules are used in transmission of the data of the first logical function entity, and/or the first logical function entity has a plurality of output interfaces for transmitting the data; herein each output interface corresponds to a respective one of the first rules.

In an embodiment, a logical function entity (such as a first logical function entity) corresponds to a plurality of processing rules or a plurality of output interfaces. The data, data packets (or packets), PDUs, PDU sets, QoS flows, data bursts, etc. that are mapped to the logical function entity (e.g., the first logical function entity) may be processed according to a corresponding processing rule (e.g., a first rule) according to the requirement (e.g., the indication from the application layer), or may be scheduled through a corresponding output interface. In other embodiments, the logical function entity may also be referred to as a logical cubic, a logical cube, or the like, as long as the corresponding function can be implemented, and the name of the logical function entity is not limited in the embodiments.

In some optional embodiments, in order to implement the integrity processing for a whole picture and the differential scheduling for the data with different importances in encoding, the association that the data in the first logical function has includes at least one of:
importances of part or all of the data being different;
layers of part or all of the data being different;

Quality of Service Flow Identifiers (QFIs) of part or all of the data being different;
the data belonging to at least one Protocol Data Unit (PDU) set;
the data belonging to at least one data burst;
the data belonging to at least one Quality of Service (QoS) flow; or
the data belonging to at least one QoS flow, the QoS flow including at least one PDU set.

The case of the QFIs of part or all of the data being different may be that, for example, any one of following parameters is different: a Packet Delay Budget (PDB) or a Packet Error Loss Rate (PER).

The layer refers to a layering technology, which is used in the video coding technology, that performs layered processing on different components in the information source to meet the requirements of the network resistance. For example, in H264 and HA265, the data of different layers is identified by the Lay-id. In H.264, the combination of the time domain (TDI), the spatial domain (DID) and the mass domain (QID) corresponds to one Layer ID. For example, the smaller the layer, the more important it is. For another example, the source coding divides the coding data into a base layer and an enhancement layer, which are different in resolution.

The data in the first logical function entity belongs to at least one PDU set. For example, all data in the first logical function entity belongs to at least part of the PDU sets of at least one GoP (or a whole picture), and the importances of the at least part of the PDU sets are the same or different.

The data in the first logical function entity belongs to at least one data burst. For example, all data in the first logical function entity belongs to at least part of the data bursts of at least one GoP (or a whole picture).

The data in the first logical function entity belongs to at least one QoS flow. For example, all data in the first logical function entity belongs to at least part of the QoS flows of at least one GoP (or a whole picture).

The data in the first logical function entity belongs to at least one QoS flow, and the QoS flow includes at least one PDU set, and the importances of these PDU sets are the same or different.

In some optional embodiments, the QoS flow includes at least one PDU set, and at least one of followings applies to one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

In the embodiment, in a case where the data in the first logical function entity belongs to at least one QoS flow and the QoS flow includes at least one PDU set, the at least one PDU set collectively forms a whole picture or a GoP, or forms a slice, or forms a tile. As an example, each PUD in the at least one PDU set may not be limited to be the I-frame, the P-frame, or the B-frame. In other embodiments, each PDU in the at least one PDU set is at least one of followings that form the picture or the GoP, the slice, or the stile: the I-frame, the B-frame or the P-frame.

In some optional embodiments, the information of the first logical function entity includes at least one of the following:
at least one Protocol Data Unit (PDU) set;
at least one data burst;
at least one Quality of Service (QoS) flow;
at least one importance;
at least one of following parameters: at least one Packet Delay Budget (PDB), a Packet Error Rate (PER), a Packet Set Delay Budget (PSDB), or a Packet Set Error Rate (PSER);
at least one of: a PDU set, a data burst, a QoS flow, a Data Radio Bearer (DRB) or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
at least one layer;
at least one projection type; or
at least one packet loss policy indication.

The case that the at least one first logical function entity belongs to at least one PDU set may specifically indicate that all data in the first logical function entity belongs to at least one PDU set. For example, all data in the first logical function entity belongs to at least part of the PDU sets of at least one GoP (or a whole picture), while the first characteristic of the data in the first logical function entity is the same.

The case that the at least one first logical function entity belongs to at least one data burst may specifically indicate that all data in the first logical function entity belongs to at least one data burst. For example, the data in the first logical function belongs to at least part of the data bursts of at least one GoP (or a whole picture), while the first characteristic of the data in the first logical function entity is the same.

The case that the at least one first logical function entity belongs to at least one QoS flow may specifically indicate that all data in the first logical function entity belongs to at least one QoS flow. For example, the data in the first logical function belongs to at least part of the QoS flows of at least one GoP (or a whole picture), while the first characteristic of the data in the first logical function entity is the same.

The indication indicating an integrity processing requirement indicates that the processing for the data in the first logical function entity requires consideration of the integrity processing requirement and/or factors. Specifically, the integrity processing means that part or all of the packets of at least one of following need to be encoded/decoded together as a whole at the media layer: the PDU set, the data burst, the QoS flow, the DRB, or the PDU. Therefore, when performing the scheduling, the transmission and/or reception of part of the packets with the integrity processing requirement should be concentrated or prioritized as far as possible under certain conditions.

The range of at least one of followings that have the integrity processing requirement: the PDU set, the data burst, the QoS flow, the DRB, or the PDU, is used to represent at least one of followings that have the integrity processing requirement: the PDU set, the data burst, the QoS flow, the DRB, or the PDU, and/or to represent that the range of the packets of the followings that have the integrity processing requirement: the PDU set, the data burst, the QoS flow, the DRB, or the PDU, requires the integrity processing.

The multi-flow coordination indication indicates the application synchronization and QoS policy coordination between multiple traffic flows of a single terminal (or UE), and/or the QoS policy coordination control enhancement of traffic flows of multiple UEs, and the coordination processing between the applications. Specifically, the multi-flow coordination indicates that the data of at least one of following: different PDU sets, data bursts, QoS flows, DRBs, or PDUs, have association relationships in at least one of following dimensions: the time, the space, or the QoS level.

The range of at least one of followings that have the multi-flow coordination processing requirement: the PDU set, the data burst, the QoS flow, the DRB, or the PDU, is used to represent at least one of followings that have the multi-flow coordination processing requirement: the PDU set, the data burst, the QoS flow, the DRB, or the PDU, and/or to represent that the range of the packets, which have the multi-flow coordination processing requirement, of the followings that have the multi-flow coordination processing requirement: the PDU set, the data burst, the QoS flow, the DRB, or the PDU, requires the multi-flow coordination processing, and it may be indicated through at least one of: the ID, the ID matching length, or the attribute.

The layer refers to a layer ID, which is used in the video coding technology, that the layered processing is performed on different components in the information source. For example, it indicates that the data in the first logical function entity is identified to be at least one of: the base layer data or the enhancement layer data.

The projection type represents a projection technology, such as holographic projection using a pyramid-shaped holographic film structure, a VS projection technology, an equidistant columnar projection technology, a 6*1 projection technology, etc.

The at least one packet loss policy indicates one or more packet loss policies used for processing the data of the first logical function entity. The packet loss policy may be at least one of the followings.

Policy 1: it is indicated that if the data of type m is discarded, the data of type n is discarded.

For example, the loss policy for the data of type B/P frame is that if the data of type I frame is lost or the transmission timeout for the data of type I frame occurs, the data of type B/P frame is discarded; and/or the data loss policy for the data of which importance is lower than the first threshold is that if the data of which importance is higher than the second threshold is lost or the transmission timeout for the data of which importance is higher than the second threshold occurs, the data of which importance is lower than the first threshold is discarded. The first threshold and the second threshold may be the same or different.

Policy 2: it is indicated that if the data of type m is discarded, then the data of type n is processed normally.

For example, the loss policy for the data of type B/P frame is that even if the data of type I frame is lost or the transmission timeout occurs, the data of type B/P frame is processed normally; and/or the data loss strategy for the data of which importance is lower than the first threshold is that even if the data of which importance is higher than the second threshold is lost or the transmission timeout occurs, the data of which importance is lower than the first threshold is processed normally. The first threshold and the second threshold may be the same or different.

Policy 3, the priorities of discarding the packets of different types are indicated.

Policy 4: it is indicated that if there are k pieces of data of type m are discarded, the data of type n is discarded.

Policy 5, it is indicated that after e packets subsequent to the q-th packet are discarded continuously and/or discontinuously, the data of type n or all related data are discarded. The all related data is all data in one PDU set/one burst set/one stream/one slice/one tile/one QoS flow/one DRB/ the current logical function entity.

The above discarding policies allow the data processing at the network node to better match the operating principle of the encoder. For example, as long as the data of type I frame is lost (or transmitted with timeout), the data of type B/P frame cannot be decoded at all. For another type of encoder, the type of service requires high resolution, even if the PDB of type I/B/P frame is timeout, if the data of type B/P frame is sent to the encoder, it may still be beneficial to the successful decoding of the related frames.

In some optional embodiments, in a case where one QoS flow is mapped to at least one Data Radio Bearer (DRB) corresponding to the first logical function entity, the QoS flow includes a plurality of PDU sets; and/or

in a case where a plurality of QoS flows are mapped to at least one DRB corresponding to the first logical function entity, each of the plurality of QoS flows includes one PDU set.

Each PDU set includes PDUs or data packets of one type or priority, or PDUs or data packets included in each PDU set correspond to (be assigned with or associated with) a same 5G QoS indicator (5QI).

In some optional embodiments of the present disclosure, the operation that the terminal processes the data of the first logical function entity based on the information of the first logical function entity and the first characteristic of the data of the first logical function entity, includes: mapping, by the terminal, at least one of a packet, a Protocol Data Unit (PDU), a PDU set or a data burst to at least one Data Radio Bearer (DRB) corresponding to the first logical function entity according to a first characteristic of the at least one of the packet, the PDU, the PDU set or the data burst.

Exemplarily, the first characteristic may be carried in the data.

Optionally, the first characteristic includes at least one of: an importance, a delay, a delay budget, a reliability, a layer, a packet length, a jitter requirement, a jitter range, a packet error rate, a packet error rate requirement, a resolution, layer information, a transmission format of Quality of Service Flow Identifier (QFI), a transmission format, a transmission bandwidth requirement, a type of slice, slice segmentation information, or a depth of parameter.

The importance is the importance that the network side and/or the terminal side performs the mapping process according to the type of data (such as the I/B/P, or TRAIL/TSA/IRAP, etc.) in the Network Abstract Layer (NAL) unit header. The transmission format indicates a video transmission type such as 4K/8K/16K. Specifically, for example, to implement the 4K resolution of 3D VR, 16 bandwidths of 4K are used, and the bandwidth of 16K reaches a transmission rate of 320-560MBPS.

In some examples, the smaller the layer, the more important it is and the higher the resolution requirement.

The network side and/or the terminal side may perform a corresponding data scheduling policy according to the information indicated by the first characteristic.

In the embodiment, the terminal maps at least one of a packet, a Protocol Data Unit (PDU), a PDU set or a data burst to at least one Data Radio Bearer (DRB) corresponding to the first logical function entity according to a first characteristic of the at least one of: the packet, the PDU, the PDU set or the data burst. Specifically, in some examples, the terminal determines that the information of the first logical function entity and/or the type of the data of the first logical function entity is matched according to a first characteristic (such as an importance, a delay budget, and/or layer information) of at least one of the packet, the PDU, the PDU set, or the data burst, and then maps the at least one of the packet, the PDU, the PDU set, or the data burst to at least one DRB corresponding to the first logical function entity. Specifically, for example, the importance of the information of the first logical function entity includes level 0 and level 1, and the importance level corresponding to the PDU set is 0, then the PDU set may be mapped to at least one DRB corresponding to the first logical function entity.

In the present embodiment, each PDU set includes the PDUs or data packets of one type or priority. For example, each PDU set includes the I frames, the P frames, or the B frames, and each type of frame may correspond to (assigned with or associated with) one 5QI.

In some optional embodiments, the information of the first logical function entity includes the information of at least one of followings that correspond to the first logical function entity: at least one first Radio Link Control (RLC) entity, at least one Packet Data Convergence Protocol (PDCP) entity, or at least one L2 entity.

In the present embodiment, in the L2 layering architecture such as PDCP/RLC/MAC, each first logical cubic shares one RLC entity and/or PDCP entity. After the RLC entity obtains the information of the first logical function entity sent by the network device, the RLC entity notifies the information to the MAC layer through the signaling or the data packet, or after the PDCP entity obtains the information of the first logical function entity sent by the network device, the PDCP entity sends the information to the RLC entity, and then the RLC entity notifies the information to the MAC layer through the signaling or the data packet. In an unlayered L2 architecture, the L2 entity may directly obtain the information of the first logical function entity sent by the network device.

In some optional embodiments, the at least one first RLC entity corresponding to the first logical function entity includes: at least one PDCP entity corresponding to the at least one first RLC entity corresponding to the first logical function entity.

In some optional embodiments, the operation that the terminal processes the data of the first logical function entity based on the information of the first logical function entity and the first characteristic of the data of the first logical function entity includes: transmitting or delivering to an MAC entity, by a RLC entity or an L2 entity of the terminal, the first indication information of an application layer or a higher layer, and/or a first characteristic of at least one of followings that are transmitted or mapped to the first logical function entity: a packet, a PDU, a PDU set, a QoS flow or a data burst.

In the present embodiment, the first RLC entity or the L2 entity of the terminal transmits to an MAC entity the first characteristic of at least one of followings that are transmitted or mapped to the first logical function entity: a packet, a PDU, a PDU set, a QoS flow or a data burst. In other embodiments, the first RLC entity or the L2 entity of the terminal may also transmit the first indication information of the application layer or the higher layer to the MAC entity.

In some optional embodiments, the operation that the first RLC entity or the L2 entity of the terminal transmits or delivers to the MAC entity the first indication information of the application layer or the higher layer, and/or the first characteristic of at least one of followings that are transmitted or mapped to the first logical function entity: the packet, the PDU, the PDU set, the QoS flow or the data burst, includes: transmitting, by the first RLC entity or the L2 entity of the terminal, the control signaling and/or a data packet to the MAC entity, and the control signaling and/or the packet header information of the data packet includes the first indication information and/or the first characteristic.

In the present embodiment, the first RLC entity or the L2 entity of the terminal may transmit the first indication information and/or the first characteristic to the MAC entity through the control signaling, or may carry the first indication information and/or the first characteristic through the packet header information of a data packet.

In some optional embodiments, the first indication information includes at least one of:
information indicating a picture quality; or
information indicating an air interface resource status.

The above-mentioned picture quality is such as the picture clarity. The above-mentioned the information indicating a picture quality is not limited to indicating the picture quality, and may also indicating the video quality, such as the video clarity.

In some optional embodiments, the first rule includes at least one of:
preferentially allocating an uplink grant to data of the first logical function entity that arrives earlier and has an integrity parameter that reaches a first value;
preferentially allocating the uplink grant to data of the first logical function entity that arrives earlier and is at a highest importance parameter level;
preferentially allocating the uplink grant to data of the first logical function entity that is at the highest importance parameter level;
preferentially allocating the uplink grant to data of the first logical function that has an integrity requirement and/or a multi-stream co-processing requirement with one or more packets that have been successfully processed;
preferentially allocating the uplink grant to data of the first logical function entity that arrives earlier and has a highest quantity requirement in a layer parameter;
preferentially allocating the uplink grant to data of the first logical function entity that has the highest quantity requirement in the layer parameter;
in a case where data at a high importance parameter level is lost in data of a Protocol Data Unit (PDU) set with an integrity characteristic, discarding other data in the PDU set with the integrity characteristic;
in a case where data at high importance parameter level is lost in the data of the PDU set with the integrity characteristic, processing other data in the PDU set with the integrity characteristic normally;
in a case where a first integrity parameter of a first PDU set in which first data is located is same as a second integrity parameter of a second PDU set in which second data is located, in response to a first priority of the first data being higher than a second priority of the second data, preferentially allocating the uplink grant to the first data; or
in a case where a first integrity indicated by the first integrity parameter of the first PDU set in which the first data is located is higher than a second integrity indicated by the second integrity parameter of the second PDU set in which the second data is located, preferentially allocating the uplink grant to the first data.

In the present embodiment, as an example, it is prioritized to transmit the data of the first PDU set, which is close to the output interface (i.e., early arrival) and has high integrity (the integrity parameter reaches the first value), in the first logical function entity. As another example, the first integrity parameter of the first PDU set in which the first data is located and the second integrity parameter of the second PDU set in which the second data is located are taken into account, and if the first integrity parameter and the second integrity parameter are the same, the priorities of the first data and the second data are considered, and the data with a higher priority is preferentially transmitted. As yet another example, the first integrity parameter of the first PDU set in which the first data is located and the second integrity parameter of the second PDU set in which the second data is located are taken into account, if the first integrity parameter is greater than the second integrity parameter, the data with a higher integrity parameter is preferentially transmitted. For example, if the transmission completion rate of the first PDU set in which the first data packet is located is 30% and the transmission completion rate of the second PDU set in which the second data packet is located is 70%, the second data packet is preferentially transmitted. For another example, the priorities of the first data packet and the second data packet are the same, and if the transmission failure rate of the first PDU set in which the first data packet is located is lower than the transmission failure rate of the second PDU set in which the second data packet is located, the first data packet is preferentially transmitted. As yet another example, if there are five packets in the first logical function entity that have the integrity requirements and/or the multi-stream co-processing requirements, if the first three packets of the five packets have been successfully processed or completely processed, the remaining packets of the five packets are processed preferentially.

The integrity parameter may include at least one of: a transmission completion rate, a transmission success rate, or a transmission failure rate. The higher the transmission completion rate and transmission success rate, the higher the corresponding integrity. The lower the transmission failure rate, the higher the corresponding integrity.

In some optional embodiments, the operation that the terminal processes the data of the first logical function entity based on the information of the first logical function entity and the first characteristic of the data of the first logical function entity includes: in a case where a picture quality indicated by the information indicating the picture quality is higher than a first threshold, and/or in a case where an air interface resource status indicated by the information indicating the air interface resource status is higher than a second threshold, processing the data that is transmitted to and/or mapped to the first logical function entity by using the first rule, herein the first rule is related at least to an integrity parameter of a PDU set, and the integrity parameter includes at least one of a transmission completion rate, a transmission success rate or a transmission failure rate.

In some other optional embodiments, the operation that the terminal processes the data of the first logical function entity based on the information of the first logical function entity and the first characteristic of the data of the first logical function entity includes: in a case where an air interface resource state indicated by the information indicating the air interface resource state is not higher than a second threshold, processing the data that is transmitted to and/or mapped to the first logical function entity by using a second rule, herein the second rule is related at least to a priority of data.

The first threshold and the second threshold may also be referred to as the numerical values. For example, the first threshold may also be referred to as a second value, and the second threshold may also be referred to as a third value.

In the present embodiment, when it is indicated that the picture quality and/or the air interface resource are good at the higher layer or the application layer, the first rule may be used to process the data transmitted to and/or mapped to the first logical function entity. That is, the first rule related to the integrity parameter of the PDU set is used, and the scheduling is performed by preferentially using GoP as the granularity. When the air interface resource is poor or limited (for example, the indication indicating the air interface resource state indicates that the air interface resource state is not higher than the second threshold), the second rule with priority as the granularity is used to perform scheduling for the data in the first logical function entity.

As illustrated in FIG. 3A, when the traditional scheduling mechanism of the logical channel is used, the packets in the logical channel are transmitted according to the first-in first-out mechanism, and there is only one output interface for the transmission, thus it is difficult to implement the integrity scheduling for the data packets of a GOP and the prioritized processing and discarding for the associated packets.

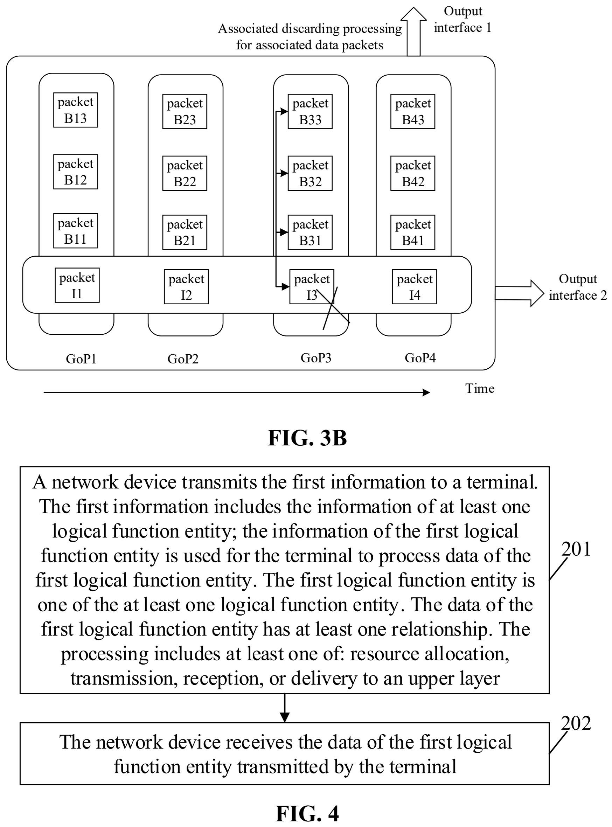

As illustrated in FIG. 3B, the scheduling mechanism of the logical function entity is used, and the packets in the logical function entity have a certain correlation, the priorities are different, and there are a plurality of output interface. The scheduling mechanism of the logical cubic may be a scheduling manner based on the priority, or a scheduling manner primarily based on the integrity and supplemented by the priority, according to the indication of an application layer or a higher layer. The indication may be, for example, an indication of picture quality and/or an indication of air interface resource status. For example, the output interface 1 corresponds to the case where the air interface resource status is good, the granularity of GoP is preferentially used to perform scheduling, and the data packet with high priority in each GoP is preferentially scheduled. For example, the output interface 2 corresponds to the case where the air interface resource is limited, and the granularity of priority is preferentially used to perform scheduling to ensure the visibility of the picture. In addition, if a data packet is lost, for example, the packet I3 is lost, other associated packets are discarded accordingly.

Based on the above embodiments, the embodiments of the present disclosure further provides a method for scheduling, and the method is applied to a network device. FIG. 4 is a second flow schematic diagram of a method for scheduling according to an embodiment of the present disclosure. As illustrated in FIG. 4, the method includes steps 201 to 202.

At step 201, a network device transmits the first information to a terminal. The first information includes the information of at least one logical function entity; the information of the first logical function entity is used for processing data of the first logical function entity by the terminal. The first logical function entity is one of the at least one logical function entity. The data of the first logical function entity has at least one relationship. The processing includes at least one of: resource allocation, transmission, reception, or delivery to an upper layer.

At step 202, the network device receives the data of the first logical function entity transmitted by the terminal.

In the present embodiment, the network device may be, for example, a base station in various communication systems. For the downlink data, a User Plane Function (UPF) establishes at least one QoS flow for at least one PDU set, at least one QoS flow is transmitted to a network device, and the network device maps at least one QoS flow to the corresponding logical function entity. The network device transmits the information of at least one logical function entity to the terminal.

In the present embodiment, the information of the logical function entity (such as the information of the first logical function entity) is used for the terminal to process the data of the first logical function entity. Specifically, the terminal processes the data of the first logical function entity according to the information of the first logical function entity and the first characteristic of the data of the first logical function entity. The first characteristic of the data of the first logical function entity may correspond to a type of the data of the first logical function entity. Optionally, the first characteristic includes at least one of: an importance, a delay, a delay budget, a reliability, a layer, a packet length, a jitter requirement, a jitter range, a packet error rate, a packet error rate requirement, a resolution, layer information, a transmission format of QFI, a transmission format, a transmission bandwidth requirement, a type of slice, slice segmentation information, or a depth of parameter.

The importance is the importance that the network side and/or the terminal side performs the mapping process according to the type of data (such as the I/B/P, or TRAIL/TSA/IRAP, etc.) in the NAL unit header. The transmission format indicates a video transmission type such as 4K/8K/16K. Specifically, for example, to implement the 4K resolution of 3D VR, 16 bandwidths of 4K are used, and the bandwidth of 16K reaches a transmission rate of 320-560MBPS.

In some examples, the smaller the layer, the more important it is and the higher the resolution requirement.

Optionally, the first characteristic may be carried in the data. The network side and/or the terminal side may perform a corresponding data scheduling policy according to the information indicated by the first characteristic.

In some optional embodiments of the present disclosure, in order to implement the integrity processing for a whole picture and the differential scheduling for the data with different importances in encoding, the relationship that the data of the first logical function entity has includes at least one of:
importances of part or all of the data being different;
layers of part or all of the data being different;
QFIs of part or all of the data being different;
the data belonging to at least one PDU set;
the data belonging to at least one data burst;
the data belonging to at least one QoS flow; or
the data belonging to at least one QoS flow, the QoS flow including at least one PDU set.

The case of the QFIs of part or all of the data being different may, for example, be that any one of following parameters is different: the PDB, the PER, the PSDB, or the PSER.

The data in the first logical function entity belongs to at least one PDU set. For example, all data in the first logical function entity belongs to at least part of the PDU sets of at least one GoP (or a whole picture), and the importances of the at least part of the PDU sets are the same or different.

The data in the first logical function entity belongs to at least one data burst. For example, all data in the first logical function entity belongs to at least part of the data bursts of at least one GoP (or a whole picture).

The data in the first logical function entity belongs to at least one QoS flow. For example, all data in the first logical function entity belongs to at least part of the QoS flows of at least one GoP (or a whole picture).

The data in the first logical function entity belongs to at least one QoS flow, and the QoS flow includes at least one PDU set, and the importances of these PDU sets are the same or different.

In some optional embodiments of the present disclosure, the QoS flow includes at least one PDU set, and at least one of followings applies to one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

In the embodiment, in a case where the data in the first logical function entity belongs to at least one QoS flow and the QoS flow includes at least one PDU set, the at least one PDU set collectively forms a whole picture or a GoP, or forms a slice, or forms a tile. As an example, each PDU in the at least one PDU set may not be limited to be the I-frame, the P-frame, or the B-frame. In other embodiments, each PDU in the at least one PDU set is at least one of followings that form the picture or the GoP, the slice, or the stile: the I-frame, the B-frame or the P-frame.

In some optional embodiments of the present disclosure, the information of the first logical function entity includes at least one of the following:
at least one PDU set;
at least one data burst;
at least one QoS flow;
at least one importance;
at least one of following parameters: at least one PDB, a PER, a PSDB, or a PSER;
at least one of: a PDU set, a data burst, a QoS flow, a DRB or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; or
at least one packet loss policy indication.

The case that the at least one first logical function entity belongs to at least one PDU set may specifically indicate that all data in the first logical function entity belongs to at least one PDU set. For example, all data in the first logical function entity belongs to at least part of the PDU sets of at least one GoP (or a whole picture), while the first characteristic of the data in the first logical function entity is the same.

The case that the at least one first logical function entity belongs to at least one data burst may specifically indicate that all data in the first logical function entity belongs to at least one data burst. For example, the data in the first logical function belongs to at least part of the data bursts of at least one GoP (or a whole picture), while the first characteristic of the data in the first logical function entity is the same.

The case that the at least one first logical function entity belongs to at least one QoS flow may specifically indicate that all data in the first logical function entity belongs to at least one QoS flow. For example, the data in the first logical function belongs to at least part of the QoS flows of at least one GoP (or a whole picture), while the first characteristic of the data in the first logical function entity is the same.

The indication indicating an integrity processing requirement indicates that the processing for the data in the first logical function entity requires consideration of the integrity processing requirement and/or factors. Specifically, the integrity processing means that part or all of the packets of the at least one of following need to be encoded/decoded together as a whole at the media layer: the PDU set, the data burst, the QoS flow, the DRB, or the PDU. Therefore, when the scheduling is performed, the transmission and/or reception of part of the packets with the integrity processing requirement should be concentrated or prioritized as far as possible under certain conditions.

The range of at least one of followings that have the integrity processing requirement: the PDU set, the data burst, the QoS flow, the DRB, or the PDU, is used to represent at least one of followings that have the integrity processing requirement: the PDU set, the data burst, the QoS flow, the DRB, or the PDU, and/or to represent that the range of the packets of the followings that have the integrity processing requirement: the PDU set, the data burst, the QoS flow, the DRB, or the PDU, requires the integrity processing.

The multi-flow coordination indication indicates the application synchronization and QoS policy coordination between multiple traffic flows of a single terminal (or UE), and/or the QoS policy coordination control enhancement of traffic flows of multiple UEs, and the coordination processing between the applications. Specifically, the multi-flow coordination indicates that the data of at least one of following: different PDU sets, data bursts, QoS flows, DRBs, or PDUs, have association relationships in at least one of following dimensions: the time, the space, or the QoS level.

The range of at least one of followings that have the multi-flow coordination processing requirement: the PDU set, the data burst, the QoS flow, the DRB, or the PDU, is used to represent at least one of followings that have the multi-flow coordination processing requirement: the PDU set, the data burst, the QoS flow, the DRB, or the PDU, and/or to represent that the range of the packets, which have the multi-flow coordination processing requirement, of the followings that have the multi-flow coordination processing requirement: the PDU set, the data burst, the QoS flow, the DRB, or the PDU, requires the multi-flow coordination processing, and it may be indicated through at least one of: the ID, the ID matching length, or the attribute.

The layer refers to a layer ID, which is used in the video coding technology, that the layered processing is performed on different components in the information source. For example, it indicates that the data in the first logical function entity is identified to be at least one of: the base layer data or the enhancement layer data.

The projection type represents a projection technology, such as holographic projection using a pyramid-shaped holographic film structure, a VS projection technology, an equidistant columnar projection technology, a 6*1 projection technology, etc.

The at least one packet loss policy indicates one or more packet loss policies used for processing the data of the first logical function entity. The packet loss policy may be at least one of the followings.

Policy 1: it is indicated that if the data of type m is discarded, the data of type n is discarded.

For example, the loss policy for the data of type B/P frame is that if the data of type I frame is lost or the transmission timeout for the data of type I frame occurs, the data of type B/P frame is discarded; and/or the data loss policy for the data of which importance is lower than the first threshold is that if the data of which importance is higher than the second threshold is lost or the transmission timeout for the data of which importance is higher than the second threshold occurs, the data of which importance is lower than the first threshold is discarded. The first threshold and the second threshold may be the same or different.

Policy 2: it is indicated that if the data of type m is discarded, the data of type n is processed normally.

For example, the loss policy for the data of type B/P frame is that even if the data of type I frame is lost or the transmission timeout for the data of type I frame occurs, the data of type B/P frame is processed normally; and/or the data loss strategy for the data of which importance is lower than the first threshold is that even if the data of which importance is higher than the second threshold is lost or the transmission timeout occurs, the data of which importance is lower than the first threshold is processed normally. The first threshold and the second threshold may be the same or different.

Policy 3, the priorities of discarding the packets of different types are indicated.

Policy 4: it is indicated that if there are k pieces of data of type m are discarded, the data of type n is discarded.

Policy 5, it is indicated that after e packets subsequent to the q-th packet are discarded continuously and/or discontinuously, the data of type n or all related data are discarded. The all related data is all data in one PDU set/one burst set/one stream/one slice/one tile/one QoS flow/one DRB/ the current logical function entity.

The above discarding policies allow the data processing at the network node to better match the operating principle of the encoder. For example, as long as the data of type I frame is lost (or transmission timeout occurs), the data of type B/P frame cannot be decoded at all. For another type of encoder, the type of the corresponding service requires high resolution, even if the PDB of type I/B/P frame is timeout, if the data of type B/P frame is sent to the encoder, it may still be beneficial to the successful decoding of the related frames.

In some optional embodiments of the present disclosure, in a case where one QoS flow is mapped to at least one DRB corresponding to the first logical function entity, the QoS flow includes a plurality of PDU sets; and/or

in a case where a plurality of QoS flows are mapped to at least one DRB corresponding to the first logical function entity, each of the plurality of QoS flows includes one PDU set.

Each PDU set includes the PDUs or data packets of one type or priority, or the PDUs or data packets included in each PDU set correspond to (has, or are associated with) a same 5G QoS indicator (5QI).

In some optional embodiments of the present disclosure, the information of the first logical function entity includes the information of at least one of followings that correspond to the first logical function entity: at least one first Radio Link Control (RLC) entity, at least one Packet Data Convergence Protocol (PDCP) entity, or at least one L2 entity.

In the present embodiment, in the L2 layering architecture such as PDCP/RLC/MAC, each first logical cubic shares one RLC entity and/or PDCP entity. After the RLC entity obtains the information of the first logical function entity sent by the network device, the RLC entity notifies the information to the MAC layer through the signaling or the data packet, or after the PDCP entity obtains the information of the first logical function entity sent by the network device, the PDCP entity sends the information to the RLC entity, and then the RLC entity notifies the information to the MAC layer through the signaling or the data packet. In an unlayered L2 architecture, the L2 entity may directly obtain the information of the first logical function entity sent by the network device.

In some optional embodiments of the present disclosure, the at least one first RLC entity corresponding to the first logical function entity includes: at least one PDCP entity corresponding to the at least one first RLC entity corresponding to the first logical function entity.

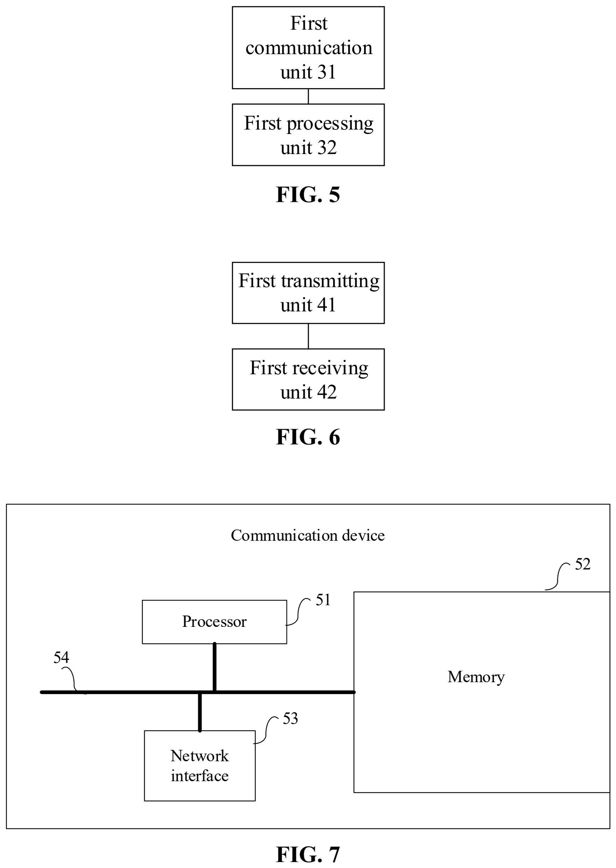

Based on the above embodiments, the embodiments of the present disclosure further provide a device for scheduling, and the device is applied to the terminal. FIG. 5 is a first schematic diagram of the compositional structure of the device for scheduling according to the embodiment of the present application. As shown in FIG. 5, the device includes: a first communication unit 31 and a first processing unit 32.

The first communication unit 31 is configured to receive first information transmitted by a network device, herein the first information includes information of at least one logical function entity.

The first processing unit 32 is configured to process data of a first logical function entity based on information of the first logical function entity and a first characteristic of the data of the first logical function entity; herein the first logical function entity is one of the at least one logical function entity; the data of the first logical function entity has at least one relationship; and the processing includes at least one of: resource allocation, transmission, reception, or delivery to an upper layer.

In some optional embodiments of the present disclosure, the first characteristic includes at least one of: an importance, a delay, a delay budget, a reliability, a layer, a packet length, a jitter requirement, a jitter range, a packet error rate, a packet error rate requirement, a resolution, layer information, a transmission format of QFI, a transmission format, a transmission bandwidth requirement, a type of slice, slice segmentation information, or a depth of parameter.

In some optional embodiments of the present disclosure, the relationship that the data of the first logical function entity has includes at least one of:
importances of part or all of the data being different;
layers of part or all of the data being different;
QFIs of part or all of the data being different;
the data belonging to at least one PDU set;
the data belonging to at least one data burst;
the data belonging to at least one QoS flow; or
the data belonging to at least one QoS flow, the QoS flow including at least one PDU set.

In some optional embodiments of the present disclosure, the QoS flow includes at least one PDU set, and at least one of followings applies to one PDU set:
the one PDU set forming a picture or a GoP;
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

In some optional embodiments of the present disclosure, the information of the first logical function entity includes at least one of the following: at least one PDU set;
at least one data burst;
at least one QoS flow;
at least one importance;
at least one of following parameters: at least one PDB, a PER, a PSDB, or a PSER;
at least one of: a PDU set, a data burst, a QoS flow, a DRB or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; or
at least one packet loss policy indication.

In some optional embodiments of the present disclosure, in a case where one QoS flow is mapped to at least one DRB corresponding to the first logical function entity, the QoS flow includes a plurality of PDU sets; and/or in a case where a plurality of QoS flows are mapped to at least one DRB corresponding to the first logical function entity, each of the plurality of QoS flows includes one PDU set.

Each PDU set includes the PDUs or data packets of one type or priority, or the PDUs or data packets included in each PDU set correspond to a same 5QI.

In some optional embodiments of the present disclosure, the information of the first logical function entity includes:
information of at least one of followings that correspond to the first logical function entity: at least one first RLC entity, at least one PDCP entity, or at least one L2 entity.

In some optional embodiments of the present disclosure, the at least one first RLC entity corresponding to the first logical function entity includes: at least one PDCP entity corresponding to the at least one first RLC entity corresponding to the first logical function entity.

In some optional embodiments of the present disclosure, the first processing unit 32 is configured to map at least one of a packet, a PDU, a PDU set or a data burst to at least one DRB corresponding to the first logical function entity according to a first characteristic of the at least one of the packet, the PDU, the PDU set or the data burst.

In some optional embodiments of the present disclosure, the first processing unit 32 is configured to: transmit or deliver to a MAC entity, by a first Radio Link Control (RLC) entity or an L2 entity of the terminal, first indication information of an application layer or a higher layer, and/or a first characteristic of at least one of followings that are transmitted or mapped to the first logical function entity: a packet, a Protocol Data Unit (PDU), a PDU set, a QoS flow or a data burst.

In some optional embodiments of the present disclosure, the first processing unit 32 is used by the first RLC entity or the L2 entity of the terminal to transmit the control signaling and/or the data packet to the MAC entity, and the control signaling and/or packet header information of the data packet includes the first indication information and/or the first characteristic.

In some optional embodiments, the first indication information includes at least one of:
information indicating a picture quality; or
information indicating an air interface resource status.

In some optional embodiments of the present disclosure, a plurality of first rules are used in transmission of the data of the first logical function entity, and/or the first logical function entity has a plurality of output interfaces for transmitting data; herein each output interface corresponds to a respective one of the first rules.

In some optional embodiments of the present disclosure, the first rule includes at least one of:
preferentially allocating an uplink grant to data of the first logical function entity that arrives earlier and has an integrity parameter that reaches a first value;
preferentially allocating the uplink grant to data of the first logical function entity that arrives earlier and is at a highest importance parameter level;
preferentially allocating the uplink grant to data of the first logical function entity that is at the highest importance parameter level;
preferentially allocating the uplink grant to data of the first logical function that has an integrity requirement and/or a multi-stream co-processing requirement with one or more packets that have been successfully processed;
preferentially allocating the uplink grant to data of the first logical function entity that arrives earlier and has a highest quantity requirement in a layer parameter;
preferentially allocating the uplink grant to data of the first logical function entity that has the highest quantity requirement in the layer parameter;
in a case where data at a high importance parameter level is lost in data of a Protocol Data Unit (PDU) set with an integrity characteristic, discarding other data in the PDU set with the integrity characteristic;
in a case where data at high importance parameter level is lost in the data of the PDU set with the integrity characteristic, processing other data in the PDU set with the integrity characteristic normally;
in a case where a first integrity parameter of a first PDU set in which first data is located is same as a second integrity parameter of a second PDU set in which second data is located, in response to a first priority of the first data being higher than a second priority of the second data, preferentially allocating the uplink grant to the first data; or
in a case where a first integrity indicated by the first integrity parameter of the first PDU set in which the first data is located is higher than a second integrity indicated by the second integrity parameter of the second PDU set in which the second data is located, preferentially allocating the uplink grant to the first data.

In some optional embodiments of the present disclosure, the first processing unit 32 is configured to: in a case where a picture quality indicated by the information indicating the picture quality is higher than a first threshold, and/or in a case where an air interface resource status indicated by the information indicating the air interface resource status is higher than a second threshold, process data that is transmitted to and/or mapped to the first logical function entity by using the first rule. The first rule is related at least to an integrity parameter of a PDU set, and the integrity parameter includes at least one of a transmission completion rate, a transmission success rate or a transmission failure rate.

In some optional embodiments of the present disclosure, the first processing unit 32 is configured to: in a case where an air interface resource state indicated by the information indicating the air interface resource state is not higher than a second threshold, process data that is transmitted to and/or mapped to the first logical function entity by using a second rule. The second rule is related at least to a priority of data.

In the embodiments of the present disclosure, the first processing unit 32 of the device may be implemented by a Central Processing Unit (CPU), a Digital Signal Processor (DSP), a Microcontroller Unit (MCU) or a Programmable Gate Array (FPGA) in the practical applications. The first communication unit 31 of the device can be implemented by a communication module (including a basic communication kit, an operating system, a communication module, a standardized interface and protocol, etc.) and a transceiver antenna in the practical applications.

The embodiments of the present disclosure further provide a device for scheduling, and the device is applied to the network device. FIG. 6 is a second schematic diagram of the compositional structure of the device for scheduling according to the embodiment of the present disclosure. As shown in FIG. 6, the device includes: a first transmitting unit 41 and a first receiving unit 42.

The first transmitting unit 41 is configured to transmit first information to a terminal, herein the first information includes information of at least one logical function entity; the information of the first logical function entity is used for processing data of the first logical function entity by the terminal; the first logical function entity is one of the at least one logical function entity; the data of the first logical function entity has at least one relationship; and the processing includes at least one of: resource allocation, transmission, reception, or delivery to an upper layer.

The first receiving unit 42 is configured to receive the data of the first logical function entity transmitted by the terminal.

In some optional embodiments of the present disclosure, the relationship that the data of the first logical function entity has includes at least one of:
importances of part or all of the data being different;
layers of part or all of the data being different;
Quality of Service Flow Identifiers (QFIs) of part or all of the data being different;
the data belonging to at least one Protocol Data Unit (PDU) set;
the data belonging to at least one data burst;
the data belonging to at least one Quality of Service (QoS) flow; or
the data belonging to at least one QoS flow, the QoS flow including at least one PDU set.

In some optional embodiments of the present disclosure, the QoS flow includes at least one PDU set, and at least one of followings applies to one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

In some optional embodiments of the present disclosure, the information of the first logical function entity includes at least one of the following:
at least one PDU set;
at least one data burst;
at least one QoS flow;
at least one importance;
at least one of following parameters: at least one PDB, a PER, a PSDB, or a PSER;
at least one of: a PDU set, a data burst, a QoS flow, a Data Radio Bearer (DRB) or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; OR
at least one packet loss policy indication.

In some optional embodiments of the present disclosure, in a case where one QoS flow is mapped to at least one DRB corresponding to the first logical function entity, the QoS flow includes a plurality of PDU sets; and/or
in a case where a plurality of QoS flows are mapped to at least one DRB corresponding to the first logical function entity, each of the plurality of QoS flows includes one PDU set.

Each PDU set includes the PDUs or data packets of one type or priority, or the PDUs or data packets included in each PDU set correspond to a same 5QI.

In some optional embodiments of the present disclosure, the information of the first logical function entity includes:
information of at least one of followings that correspond to the first logical function entity: at least one first Radio Link Control (RLC) entity, at least one Packet Data Convergence Protocol (PDCP) entity, or at least one L2 entity.

In some optional embodiments of the present disclosure, the at least one first RLC entity corresponding to the first logical function entity includes: at least one PDCP entity corresponding to the at least one first RLC entity corresponding to the first logical function entity.

In the embodiments of the present disclosure, the first transmitting unit 41 and the first receiving unit 42 of the device may be implemented by a communication module (including a basic communication kit, an operating system, a communication module, a standardized interface and protocol, etc.) and a transceiver antenna in the practical applications.

It is to be noted that the device for scheduling provided in the above-mentioned embodiments, when scheduling is performed, is only illustrated by way of example of the division of the above-mentioned program modules. In the practical application, the above-mentioned processes may be allocated to different program modules to implement according to the requirements. That is, the internal structures of the device may be divided into different program modules to complete all or part of the above-mentioned processes. In addition, the device for scheduling provided in the above embodiment belongs to the same concept as embodiments of the method for scheduling, and the specific implementation process thereof is detailed in the method embodiments, and will not be elaborated herein.

An embodiment of the present disclosure further provides a communication device. The communication device is a terminal or a network device in the above-mentioned embodiments. FIG. 7 is a structural schematic diagram of a hardware composition of a communication device according to an embodiment of the present disclosure. As illustrated in FIG. 7, the communication device includes a memory 52, a processor 51, and a computer program stored in the memory 52 and executable on the processor 51, and the processor 51, when executing the program, implements the steps of the method for scheduling applied to a terminal or a network device.

Optionally, the communication device further includes at least one network interface 53. The various components in the communication device are coupled together via a bus system 54. It is to be understood that the bus system 54 is used to implement the connection communication between these components. In addition to the data bus, the bus system 54 further includes a power bus, a control bus and a status signal bus. However, the various buses are marked as bus system 54 in FIG. 7 for clarity.

It is to be understood that the memory 52 may be volatile memory or non-volatile memory and may also include both the volatile and non-volatile memory. The non-volatile memory may be a Read-Only Memory (ROM), a Programmable ROM (PROM), an Erasable PROM (EPROM), an Electrically EPROM (EEPROM), Magnetic Random Access Memory (FRAM), Flash Memory, Magnetic Surface Memory, Optical Disk, or Compact Disc Read-Only Memory (CD-ROM). The magnetic surface memory may be Disk storage Or Magnetic tape memory. The volatile memory may be a Random Access Memory (RAM), which is used as an external cache. By way of example but not restrictive description, many forms of RAMs may be used, for example, a Static RAM (SRAM), Synchronous Static Random Access Memory (SSRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). The memory 52 described herein includes, but is not limited to, these and any other proper types of memories.

The methods disclosed in the above embodiments of the present disclosure may be applied to the processor 51, or implemented by the processor 51. The processor 51 may be an integrated circuit chip, which has signal processing capability. During the implementation, the various steps of the above method may be implemented by the integrated logic circuit of hardware in processor 51 or instructions in the form of software. The processor 51 described above may be a general purpose processor, a Digital Signal Processor (DSP) or other programmable logic device, a discrete gate or transistor logic device, a discrete hardware component or the like. Processor 51 may implement or execute the methods, steps and logic block diagrams disclosed in embodiments of the present disclosure. The general purpose processor can be a microprocessor or any conventional processor. The steps of the method disclosed in combination with the embodiment of the disclosure can be directly embodied as being executed and completed by the hardware decoding processor, or be executed and completed by the combination of the hardware and software modules in the decoding processor. The software module may be located in a storage medium. The storage medium is located in a memory 52 and the processor 51 reads the information in the memory 52 to complete the steps of the aforementioned method in conjunction with the hardware.

In an exemplary embodiment, the communication device may be implemented by one or more Application Specific Integrated Circuits (ASICs), DSP, Programmable Logic Device (PLD), Complex Programmable Logic Device (CPLD), FPGA, General Purpose Processor, Controller, MCU, Microprocessor, or other electronic components to perform the aforemention methods.

In an exemplary embodiment, an embodiment of the present disclosure further provides a computer-readable storage medium, for example, a memory 52 including the computer program. The computer program may be executed by a processor 51 of the communication device to implement the above-mentioned method. The computer-readable storage medium may be a memory such as FRAM, ROM, PROM, EPROM, EEPROM, Flash Memory, magnetic surface memory, optical disc, or CD-ROM. It may also be one of a variety of devices including one or any combination of the above memories.

The computer-readable storage medium according to the embodiment of the present disclosure stores the computer program thereon, and the program, when executed by a processor, implements the steps of the method for scheduling applied to a terminal or a network device.

The features disclosed in several embodiments of the product provided in the disclosure can be arbitrarily combined as long as there is no conflict therebetween to obtain a new embodiment of a product.

The features disclosed in several embodiments of the product provided in the disclosure can be arbitrarily combined as long as there is no conflict therebetween to obtain a new embodiment of a product.

The features disclosed in several embodiments of methods or devices provided in the disclosure can be arbitrarily combined as long as there is no conflict therebetween to obtain a new embodiment of a method or a device.

In several embodiments provided by the present disclosure, it is to be understood that the disclosed devices and methods can be implemented in other ways. The embodiments of a device described above are only illustrative, for example, the division of units is only a logical function division, and can be implemented in other ways, for example, multiple units or components can be combined, or integrated into another system, or some features can be ignored or not implemented. In addition, the coupling, or direct coupling, or communication connection between the various components illustrated or discussed may be indirect coupling or communication connection through some interfaces, devices or units, and may be electrical, mechanical, or in other forms.

The units described above as separate elements may or may not be physically separated, and the components displayed as a unit may or may not be a physical unit, i.e. it may be located in one place or may be distributed over multiple network units. Part or all of the units can be selected according to actual requirements to achieve the purpose of the embodiment solution.

In addition, all functional units in all embodiments of the present disclosure can be all integrated in one processing unit, each unit can be separately used as a unit, or two or more units can be integrated in one unit. The integrated unit can be implemented either in the form of hardware or in the form of hardware plus software functional unit.

Those ordinary skilled in the art will appreciate that all or part of the steps for implementing the above method embodiments may be implemented by the hardware associated with the program instructions, the aforementioned program may be stored in a computer readable storage medium, and the program, when executed, performs the steps including the above steps of the method embodiments. The aforementioned storage medium includes various medium capable of storing program codes, such as mobile storage device, ROM, RAM, magnetic disk or optical disk.

Alternatively, if the integrated unit of the present disclosure is implemented in the form of a software function module and sold or used as an independent product, it can also be stored in a computer-readable storage medium. Based on such understanding, the technical solution in the embodiments of the present disclosure in essence or the part contributing to the related art may be embodied in the form of software product, the software product is stored in a storage medium and includes a plurality of instructions for enabling a computer device (which can be a personal computer, a server, a network device, etc.) to perform all or part of the method according to each embodiment of the present disclosure. The aforementioned storage medium includes various medium capable of storing program codes, such as mobile storage device, ROM, RAM, magnetic disk or optical disk.

The descriptions above are only the specific embodiments of the present disclosure, and is not intended to limit the scope of protection of the embodiments of the present disclosure. Any change and replacement are easily to think within the technical scope of the embodiments of the present by those skilled in the art, and fall with the protection scope of the present disclosure. Therefore, the scope of protection of the embodiments of the present disclosure shall be defined by the scope of protection of the claims.

## Claims

1. A method for scheduling, comprising:
receiving, by a terminal, first information transmitted by a network device, wherein the first information comprises information of at least one logical function entity; and
processing, by the terminal, data of a first logical function entity based on information of the first logical function entity and a first characteristic of the data of the first logical function entity; wherein the first logic functional entity is one of the at least one logical function entity;
wherein the data of the first logical function entity has at least one relationship; and the processing comprises at least one of: resource allocation, transmission, reception, or delivery to an upper layer.

2. The method of claim 1, wherein the first characteristic comprises at least one of:
an importance, a delay, a delay budget, a reliability, a layer, a packet length, a jitter requirement, a jitter range, a packet error rate, a packet error rate requirement, a resolution, layer information, a Quality of Service Flow Identifier (QFI), a transmission format, a transmission bandwidth requirement, a type of slice, slice segmentation information, or a depth of parameter.

3. The method of claim 1, wherein the relationship that the data of the first logical function entity has comprises at least one of:
importances of part or all of the data being different;
layers of part or all of the data being different;
Quality of Service Flow Identifiers (QFIs) of part or all of the data being different;
the data belonging to at least one Protocol Data Unit (PDU) set;
the data belonging to at least one data burst;
the data belonging to at least one Quality of Service (QoS) flow; or
the data belonging to at least one QoS flow, the QoS flow comprising at least one PDU set.

4. The method of claim 3, wherein the QoS flow comprises at least one PDU set, and at least one of followings applies to one of the at least one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

5. The method of claim 1, wherein the information of the first logical function entity comprises at least one of:
at least one Protocol Data Unit (PDU) set;
at least one data burst;
at least one Quality of Service (QoS) flow;
at least one importance;
at least one of following parameters: at least one packet delay budget (PDB), a packet error rate (PER), a packet set delay budget (PSDB), or a packet set error rate (PSER);
at least one of: a PDU set, a data burst, a QoS flow, a Data Radio Bearer (DRB) or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; or
at least one packet loss policy indication.

6. The method of claim 3, wherein in a case where one QoS flow is mapped to at least one Data Radio Bearer (DRB) corresponding to the first logical function entity, the QoS flow comprises a plurality of PDU sets; and/or
in a case where a plurality of QoS flows are mapped to at least one DRB corresponding to the first logical function entity, each of the plurality of QoS flows comprises one PDU set;
wherein each PDU set comprises PDUs or data packets of one type or priority, or PDUs or data packets comprised in each PDU set correspond to a same 5G QoS indicator (5QI).

7. The method of claim 1, wherein the information of the first logical function entity comprises:
information of at least one of followings that correspond to the first logical function entity: at least one first Radio Link Control (RLC) entity, at least one Packet Data Convergence Protocol (PDCP) entity, or at least one L2 entity.

8. The method of claim 7, wherein the at least one first RLC entity corresponding to the first logical function entity comprises:
at least one PDCP entity corresponding to the at least one first RLC entity.

9. The method of claim 1, wherein processing, by the terminal, the data of the first logical function entity based on the information of the first logical function entity and the first characteristic of the data of the first logical function entity comprises:
mapping, by the terminal, at least one of a packet, a Protocol Data Unit (PDU), a PDU set or a data burst to at least one Data Radio Bearer (DRB) corresponding to the first logical function entity according to a first characteristic of the at least one of the packet, the PDU, the PDU set or the data burst.

10. The method of claim 1, wherein processing, by the terminal, the data of the first logical function entity based on the information of the first logical function entity and the first characteristic of the data of the first logical function entity comprises:
transmitting or delivering to a Medium Access Control (MAC) entity, by a first Radio Link Control (RLC) entity or an L2 entity of the terminal, first indication information of an application layer or a higher layer, and/or a first characteristic of at least one of followings that are transmitted or mapped to the first logical function entity: a packet, a Protocol Data Unit (PDU), a PDU set, a QoS flow or a data burst.

11. The method of claim 10, wherein transmitting or delivering to the MAC entity, by the first RLC entity or the L2 entity of the terminal, the first indication information of the application layer or the higher layer, and/or the first characteristic of at least one of followings that are transmitted or mapped to the first logical function entity: the packet, the PDU, the PDU set, the QoS flow or the data burst, comprises:
transmitting, by the first RLC entity or the L2 entity of the terminal, control signaling and/or a data packet to the MAC entity, and the control signaling and/or packet header information of the data packet comprises the first indication information and/or the first characteristic.

12. The method of claim 10, wherein the first indication information comprises at least one of:
information indicating a picture quality; or
information indicating an air interface resource status.

13. The method of any one of claims 1 to 12, wherein a plurality of first rules are used in transmission of the data of the first logical function; and/or
the first logical function entity has a plurality of output interfaces for transmitting data; wherein each output interface corresponds to a respective one of the first rules.

14. The method of claim 13, wherein the first rule comprises at least one of:
preferentially allocating an uplink grant to data of the first logical function entity that arrives earlier and has an integrity parameter that reaches a first value;
preferentially allocating the uplink grant to data of the first logical function entity that arrives earlier and is at a highest importance parameter level;
preferentially allocating the uplink grant to data of the first logical function entity that is at the highest importance parameter level;
preferentially allocating the uplink grant to data of the first logical function that has an integrity requirement and/or a multi-stream co-processing requirement with one or more packets that have been successfully processed;
preferentially allocating the uplink grant to data of the first logical function entity that arrives earlier and has a highest quantity requirement in a layer parameter;
preferentially allocating the uplink grant to data of the first logical function entity that has the highest quantity requirement in the layer parameter;
in a case where data at a high importance parameter level is lost in data of a Protocol Data Unit (PDU) set with an integrity characteristic, discarding other data in the PDU set with the integrity characteristic;
in a case where data at high importance parameter level is lost in the data of the PDU set with the integrity characteristic, processing other data in the PDU set with the integrity characteristic normally;
in a case where a first integrity parameter of a first PDU set in which first data is located is same as a second integrity parameter of a second PDU set in which second data is located, in response to a first priority of the first data being higher than a second priority of the second data, preferentially allocating the uplink grant to the first data; or
in a case where a first integrity indicated by the first integrity parameter of the first PDU set in which the first data is located is higher than a second integrity indicated by the second integrity parameter of the second PDU set in which the second data is located, preferentially allocating the uplink grant to the first data.

15. The method of claim 12, wherein processing, by the terminal, the data of the first logical function entity based on the information of the first logical function entity and the first characteristic of the data of the first logical function entity comprises:
in a case where a picture quality indicated by the information indicating the picture quality is higher than a first threshold, and/or in a case where an air interface resource status indicated by the information indicating the air interface resource status is higher than a second threshold, processing data that is transmitted to and/or mapped to the first logical function entity by using the first rule, wherein the first rule is related at least to an integrity parameter of a PDU set, and the integrity parameter comprises at least one of a transmission completion rate, a transmission success rate or a transmission failure rate.

16. The method of claim 12, wherein processing, by the terminal, the data of the first logical function entity based on the information of the first logical function entity and the first characteristic of the data of the first logical function entity comprises:
in a case where an air interface resource state indicated by the information indicating the air interface resource state is not higher than a second threshold, processing data that is transmitted to and/or mapped to the first logical function entity by using a second rule, wherein the second rule is related at least to a priority of data.

17. A method for scheduling, comprising:
transmitting, by a network device, first information to a terminal, wherein the first information comprises information of at least one logical function entity; the information of the first logical function entity is used for the terminal to process data of the first logical function entity; the first logical function entity is any one of the at least one logical function entity; the data of the first logical function entity has at least one relationship; and the processing comprises at least one of: resource allocation, transmission, reception, or delivery to an upper layer.
receiving, by the network device, the data of the first logical function entity transmitted by the terminal.

18. The method of claim 17, wherein the relationship that the data of the first logical function entity has comprises at least one of:
importances of part or all of the data being different;
layers of part or all of the data being different;
Quality of Service Flow Identifiers (QFIs) of part or all of the data being different;
the data belonging to at least one Protocol Data Unit (PDU) set;
the data belonging to at least one data burst;
the data belonging to at least one Quality of Service (QoS) flow; or
the data belonging to at least one QoS flow, the QoS flow comprising at least one PDU set.

19. The method of claim 18, wherein the QoS flow comprises at least one PDU set, and at least one of followings applies to one of the at least one PDU set:
the one PDU set forming a picture or a group of pictures (GoP);
the one PDU set forming one of an I-frame, a B-frame or a P-frame of a picture or a GoP;
the one PDU set forming at least one of an I-frame, a B-frame or a P-frame of a picture or a GoP;
the one PDU set forming at least one of an I-frame, a B-frame or a P-frame of a slice and/or a tile of a picture or a GoP;
the one PDU set forming one of an I-frame, a B-frame or a P-frame of a slice and/or a tile of a picture or a GoP;
the one PDU set forming at least one of different layers of a picture or a GoP; or
importances and/or layers of part of PDUs of the one PDU set being different.

20. The method of claim 17, wherein the information of the first logical function entity comprises at least one of:
at least one Protocol Data Unit (PDU) set;
at least one data burst;
at least one Quality of Service (QoS) flow;
at least one importance;
at least one of following parameters: at least one packet delay budget (PDB), a packet error rate (PER), a packet set delay budget (PSDB), or a packet set error rate (PSER);
at least one of: a PDU set, a data burst, a QoS flow, a Data Radio Bearer (DRB) or a PDU, which corresponds to at least one of following parameters: at least one PDB, a PER, a PSDB or a PSER;
an indication with an integrity processing requirement;
a range of at least one of followings that have an integrity processing requirement: a PDU set, a data burst, a QoS flow, a DRB or a PDU;
a multi-stream coordination indication;
a range of at least one of followings that have a multi-stream co-processing requirement: a PDU set, a data burst, a QoS flow, a DRB or a PDU;
at least one layer;
at least one projection type; or
at least one packet loss policy indication.

21. The method of claim 18, wherein in a case where one QoS flow is mapped to at least one Data Radio Bearer (DRB) corresponding to the first logical function entity, the QoS flow comprises a plurality of PDU sets; and/or
in a case where a plurality of QoS flows are mapped to at least one DRB corresponding to the first logical function entity, each of the plurality of QoS flows comprises one PDU set;
wherein each PDU set includes PDUs or data packets of one type or priority, or PDUs or data packets comprised in each PDU set correspond to a same 5G QoS indicator (5QI).

22. The method of claim 17, wherein the information of the first logical function entity comprises:
information of at least one of followings that correspond to the first logical function entity: at least one first Radio Link Control (RLC) entity, at least one Packet Data Convergence Protocol (PDCP) entity, or at least one L2 entity.

23. The method of claim 22, wherein the at least one first RLC entity corresponding to the first logical function entity comprises:
at least one PDCP entity corresponding to the at least one first RLC entity.

24. A device for scheduling, comprising: a first communication unit and a first processing unit; wherein,
the first communication unit is configured to receive first information transmitted by a network device, wherein the first information comprises information of at least one logical function entity; and
the first processing unit is configured to process data of a first logical function entity based on information of the first logical function entity and a first characteristic of the data of the first logical function entity; wherein the first logical function entity is one of the at least one logical function entity; the data of the first logical function entity has at least one relationship; and the processing comprises at least one of: resource allocation, transmission, reception, or delivery to an upper layer.

25. A device for scheduling, comprising: a first transmitting unit and a first receiving unit; wherein,
the first transmitting unit is configured to transmit first information to a terminal, wherein the first information comprises information of at least one logical function entity; the information of the first logical function entity is used for processing data of the first logical function entity by the terminal; the first logical function entity is any one of the at least one logical function entity; the data of the first logical function entity has at least one relationship; and the processing comprises at least one of: resource allocation, transmission, reception, or delivery to an upper layer.
the first receiving unit is configured to receive the data of the first logical function entity transmitted by the terminal.

26. A computer-readable storage medium having stored thereon a computer program which, when executed by a processor, implements steps of the method of any one of claims 1 to 16, or
the program, when executed by the processor, implements steps of the method of any one of claims 17 to 23.

27. A communication device, comprising a memory, a processor, and a computer program stored on the memory and executable on the processor, the processor is configured to implement steps of the method of any one of claims 1 to 16 when the program is executed; or
the processor is configured to steps of the method of any one of claims 17 to 34 when the program is executed.
